# EUROPÄISCHE PATENTSCHRIFT

(11) **EP 2 140 468 B1**
(45) Veröffentlichungstag und Bekanntmachung des Hinweises auf die Patenterteilung: **26.08.2015**
(21) Anmeldenummer: 08749519.8
(22) Anmeldetag: 04.04.2008
(51) Int. Cl.: B23K 11/11, H01H 33/668, B23K 15/00, B23K 20/10, B23K 26/20, B23K 26/32

(54) **VERFAHREN ZUR BEFESTIGUNG EINES GETTERS FÜR EINE VAKUUMSCHALTRÖHRE SOWIE VAKUUMSCHALTRÖHRE**
METHOD FOR SECURING A GETTER FOR A VACUUM SWITCHING TUBE AND VACUUM SWITCHING TUBE
PROCÉDÉ DE FIXATION D'UN GETTER POUR UN INTERRUPTEUR À VIDE ET INTERRUPTEUR À VIDE

(30) Priorität: 24.04.2007 DE 102007020238
(43) Veröffentlichungstag der Anmeldung: 06.01.2010
(73) Patentinhaber: Siemens Aktiengesellschaft, 80333 München (DE)
(72) Erfinder: SCHÜMANN, Ulf, 10559 Berlin (DE); SPÖRER, Henryk, 14473 Potsdam (DE)
(86) Internationale Anmeldenummer: PCT/EP2008/054111
(87) Internationale Veröffentlichungsnummer: WO 2008/128872

(56) Entgegenhaltungen:
- DE-A1- 19 807 615
- DE-U1- 29 901 111

## Beschreibung

Die Erfindung betrifft ein Verfahren zur Befestigung eines Getters an einem unter Einsatz von Kupfer hergestellten Konstruktionsbauteil einer Vakuumschaltröhre sowie eine Vakuumschaltröhre mit einem Getter, das mit einem Konstruktionsbauteil der Vakuumschaltröhre durch Schweißen befestigt ist.

Vakuumschaltröhren enthalten einen feststehenden und einen axial beweglichen Kontakt, die von einem Vakuumgehäuse umgeben sind. Um die Qualität des Vakuums im Innern des Gehäuses der Vakuumschaltröhre sicherzustellen, ist es üblich, innerhalb des Gehäuses ein Getter anzuordnen. Dieses Getter dient zur Absorption von Gasen, die beim Betrieb der Vakuumschaltröhre entstehen und die Qualität des Vakuums verschlechtern können. Bekannte Getter weisen einen Träger aus einem vernickelten Blechstreifen auf, auf den das Gettermaterial wie Zirkon-Aluminium oder Zirkon-Titan aufgebracht ist, und der an einem metallenen Konstruktionsteil der Vakuumschaltröhre, beispielsweise dem Hauptschirm oder einem Endflansch, befestigt ist. Üblicherweise sind ein oder mehrere Getter als Getterfelder auf einem vernickelten Blechstreifen angeordnet, wobei diese Blechstreifen an einem Schirm oder einem Endflansch der Vakuumröhre durch Punktschweißen befestigt sind.

Aus der DE 198 07 615 C 2 ist eine Vakuumschaltröhre bekannt, die so ausgestaltet ist, dass die Befestigung einer Gettervorrichtung an einem Metallteil unabhängig von der Werkstoffkombination möglich ist. Dazu wird bei der bekannten Vakuumschaltröhre das die Gettervorrichtung tragende Metallteil mit einer flachen Nut versehen, wobei das Blechteil in die Nut eingelegt und durch Prägungen des Nutrandes fixiert wird.

In der DE 299 01 111 U 1 ist eine Vakuumschaltröhre beschrieben, die eine rein mechanische Befestigung des Getters an einem Schirm der Vakuumschaltröhre vorschlägt, indem die Befestigung des Getters in Gestalt eines geschlossenen Getterringes erfolgt. Dabei erfolgt die Befestigung des Getters bevorzugt durch eine mechanische Verformung des Schirmes nach dem Aufbringen und In-Position-Setzen des Getterringes auf dem Schirm.

Das Befestigen eines Getters durch eine mechanische Verformung eines Konstruktionsteils ist aufwändig. Eine an sich wünschenswerte direkte Schweißverbindung mit Konstruktionsteilen aus Kupfer ist nicht möglich, da das Kupfer die beim Schweißen eingetragene Energie aufgrund seiner guten Wärmeleitfähigkeit zu schnell ableitet.

Ausgehend von diesem Stand der Technik liegt der Erfindung die Aufgabe zugrunde, ein Verfahren und eine Vakuumschaltröhre zu schaffen, bei der die Befestigung des Getters auch dann durch Schweißen ohne mechanische Verformungen auch erfolgen kann, wenn das Konstruktionsteil aus Kupfer besteht oder einen hohen Kupferanteil aufweist.

Diese Aufgabe wird erfindungsgemäß entsprechend Anspruch 1 dadurch gelöst, dass die für die Befestigung des Getters vorgesehene Oberfläche des Konstruktionsbauteils einer Vakuumschaltröhre als Unterlage für das Getter mit einer Zwischenschicht aus einem elektrisch und thermisch schlecht leitenden Metall versehen wird, und das Getter anschließend auf dem durch die Zwischenschicht gebildeten Verbundmaterial angeschweißt wird.

Vorzugsweise wird die Befestigung durch Punktschweißen herbeigeführt. Dabei hat sich herausgestellt, dass bereits eine geringe Schichtdicke von 0,1 mm ausreicht, wenn als Zwischenschicht eine CrNi-Schicht verwendet wird. Zwischenschichten aus elektrisch und thermisch schlecht leitendem Metall können beispielsweise je nach den Materialeigenschaften durch Platinieren, Galvanisieren oder Sputtern aufgebracht werden.

Als Material für das Getter können die üblichen Gettermaterialien Titan oder eine metallische Legierung wie ZrAl, ZrTi, ZrAlTi, ZrVFeTi oder MoTi verwendet werden.

Ein Verschweißen des Getters auf dem mit einer Zwischenschicht versehenen Konstruktionsbauteil aus Kupfer ist durch Punktschweißen möglich. Es ist auch möglich, die Schweißverbindung durch Laserschweißen, Elektronenstrahlschweißen, Widerstandsschweißen oder Ultraschallschweißen durchzuführen.

Eine Vakuumschaltröhre entsprechend Anspruch 9 mit einem unter Einsatz von Kupfer hergestellten Konstruktionsbauteil, an dem ein Getter befestigt ist, ist erfindungsgemäß dadurch gekennzeichnet, dass das Konstruktionsbauteil im Befestigungsbereich des Getters mit einer ein Verschweißen gestattenden Zwischenschicht aus einem elektrisch und thermisch schlecht leitenden Metall versehen ist.

Nachfolgend werden Ausführungsbeispiele der Erfindung anhand der Zeichnungen näher-erläutert. Es zeigen:
- Fig. 1: eine schematische Darstellung einer Vakuumschaltröhre mit diversen Konstruktionsteilen, an denen Getter angeschweißt sind, und
- Fig. 2: eine vergrößerte Darstellung der Schichtenfolge im Bereich eines angeschweißten Getters

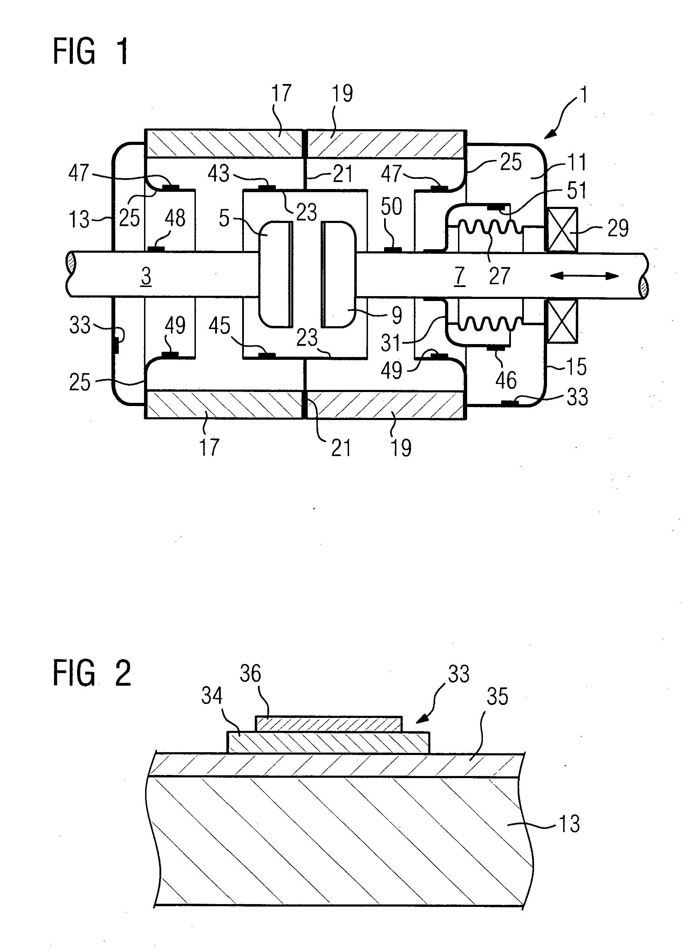

In Fig. 1 ist schematisch eine Vakuumschaltröhre 1 mit ihren wesentlichen Konstruktionsbauteilen in einer Schnittansicht dargestellt. Die Vakuumschaltröhre 1 verfügt über einen feststehenden Leiter 3 mit einem feststehenden Kontaktstück 5 und einen beweglichen Leiter 7 mit einem beweglichen Kontaktstück 9. In Fig. 1 ist die Vakuumschaltröhre in ihrer offenen Stellung dargestellt. Die Kontaktstücke 5, 9 bestehen meistens aus Kupfer-Chrom und sind in einer zylinderförmigen Vakuumschaltkammer 11 miteinander fluchtend angeordnet.

Die Vakuumschaltkammer 11 wird in axialer Richtung durch ein erstes Deckelteil 13 und ein zweites Deckelteil 15 abgeschlossen. Zwischen den Deckelteilen 13, 15 befindet sich bei dem in Fig. 1 dargestellten Ausführungsbeispiel ein erster zylindrischer Isolierkörper 17 und ein zweiter zylindrischer Isolierkörper 19. Die zylindrischen Isolierkörper 17, 19 sind mit Hilfe einer Ringscheibe 21 vakuumdicht miteinander verbunden. Die Ringscheibe 21 dient auch als Träger für einen zylindrischen Dampfschirm 23, durch den die Isolierkörper 17 und 19 gegenüber dem Bereich der Kontaktstücke 5 und 9 abgeschirmt sind. Wie man in Fig. 1 weiterhin erkennt, sind an den vom Dampfschirm 23 wegweisenden Enden der zylindrischen Isolierkörper 17, 19 Endschirme 25 angeordnet.

Der bewegliche Leiter 7 ist mit Hilfe eines Metallfaltenbalges 27 beweglich gegenüber dem zweiten Deckelteil 15 vakuumfest abgedichtet, wobei ein Lager 29 zur axialen Führung des beweglichen Leiters 7 dient. Der Metallfaltenbalg 27 ist vorzugsweise von einer zylindrischen Balgkappe 31 umgeben.

Als Material für die Isolierkörper 17 und 19 wird häufig Keramik verwendet. Die Deckelteile 13 und 15 können aus Edelstahl hergestellt sein. Für den festen Leiter 3 und den beweglichen Leiter 7 wird meist Kupfer eingesetzt, das sich durch seine hohe elektrische Leitfähigkeit auszeichnet. Auch der Dampfschirm 23, die Endschirme 25 und die Balgkappe 31 werden im Allgemeinen aus Kupfer oder einem kupferhaltigen Material hergestellt.

Wenn das erste Deckelteil 13 und das zweite Deckelteil 15 aus Edelstahl bestehen, ist es möglich, das in Vakuumschaltröhren erforderliche Getter 33 mit einem der Deckelteile 13, 15 einfach durch Punktschweißen zu verbinden. Das in Fig. 2 vergrößert im Schnitt dargestellte Getter 33 besteht aus einem vernickelten Blechstreifen 34, der mit einem Gettermaterial 36 beschichtet ist. Als Material für das Getter 33 können die üblichen Gettermaterialien Titan oder eine metallische Legierung wie ZrAl, ZrTi, ZrAlTi, ZrVFeTi oder MoTi verwendet werden.

Eine Punktverschweißung zwischen dem Getter 33 und dem Deckelteil 13 oder 15 ist nicht ohne weiteres möglich, wenn die Deckelteile 13, 15 aus Kupfer bestehen, weil Kupfer die beim Schweißen erforderliche Wärme besonders schnell abführt und beim Elektroschweißen aufgrund des niedrigen elektrischen Widerstandes eine ausreichende Erzeugung von Joulescher Wärme verhindert.

Als Beispiel für eine Getterbefestigung ist in Fig. 2 das erste Deckelteil 13 mit dem aufgebrachten Getter 33 vergrößert im Schnitt dargestellt. Das Deckelteil 13 besteht aus Kupfer und ist mit einer Zwischenschicht 35 aus einem elektrisch und thermisch schlecht leitenden Metall versehen. Die Zwischenschicht 35 besteht beispielsweise aus einem CrNi-Edelstahl, aus CrNi, Ni, Cr, Fe, Cu, Mg, Al, W oder Legierungen aus diesen Metallen. Besonders geeignete Materialien zeichnen sich dadurch aus, dass deren Produkt aus elektrischer Leitfähigkeit und deren Wärmeleitfähigkeit weniger als das 0,125-fache dieses Produktes für Kupfer ist. Dadurch, dass das Getter 33 nicht unmittelbar mit dem ersten Deckelteil 13 aus Kupfer in Kontakt steht, sondern ein Verbundmaterial aus Kupfer und der Zwischenschicht 35 vorliegt, ist es möglich, das Getter 33 mit dem aus Kupfer bestehenden ersten Deckelteil 13 durch Schweißen, insbesondere Punktschweißen, zu verbinden.

Das in Fig. 2 dargestellte Verbundmaterial aus Kupfer und Edelstahl kann bevorzugt durch Platinieren hergestellt sein. Es ist je nach dem verwendeten Material möglich, die Zwischenschicht 35 durch Galvanisieren oder Sputtern aufzubringen. Die Schichtdicke einer Zwischenschicht 35 aus CrNi-Edelstahl beträgt 0,01 bis 1 mm, vorzugsweise 0,1 mm.

Zur Befestigung des Getters 33 ist es ausreichend, wenn die Zwischenschicht 35 lediglich in den Bereichen ausgebildet ist, wo eine Punktverschweißung mit dem Getter 33 erfolgen soll. Es ist somit nicht erforderlich, jeweils das gesamte Konstruktionsbauteil, und insbesondere das gesamte erste Deckelteil 13 mit einer Zwischenschicht 35 herzustellen. Vielmehr reicht es aus, eine Zwischenschicht 35 in dem Bereich des Konstruktionsbauteils vorzusehen, wo das Getter 33 befestigt werden soll.

Der Bereich der Zwischenschicht 35 unterscheidet sich durch einen ausreichend hohen Ohmschen Widerstand und eine niedrige Wärmeleitfähigkeit vom üblicherweise verwendeten Kupfer, um auf diese Weise ein Punktschweißen, Laserschweißen, Elektronenstrahlschweißen, Widerstandsschweißen oder Ultraschallschweißen zu ermöglichen.

Durch den Einsatz einer Zwischenschicht 35, deren elektrische und thermische Wärmeleitfähigkeit wesentlich kleiner als die von Kupfer oder einer Kupferlegierung ist, ist es somit möglich, das in einer Vakuumschaltröhre erforderliche Getter 33 an beliebigen Konstruktionsbauteilen durch Schweißen anzubringen, die im wesentlichen aus Kupfer bestehen. Eine Beschränkung auf Schweißverbindungen mit Edelstahlmaterialien kann somit durch den Einsatz der Zwischenschicht 35 beseitigt werden.

Anhand der schematischen Darstellung der Vakuumschaltröhre 1 in Fig. 1 lassen sich eine Reihe von Konstruktionsbauteilen aufzeigen, die auch dann zum Verschweißen mit einem Getter geeignet sind, wenn in der oben erörterten Weise eine Zwischenschicht 35 eingesetzt wird.

Fig. 1 veranschaulicht zusätzlich zum Getter 33 schematisch insbesondere die Anordnung eines punktverschweißten Getters 43 auf der von den Kontaktstücken 5, 9 wegweisenden Seite des zylindrischen Dampfschirmes 23. Es ist auch möglich, auf der Innenseite des aus Kupfer bestehenden Dampfschirmes 23 ein Getter 45 durch Punktschweißen zu befestigen, wenn der zylindrische Dampfschirm 23 beispielsweise durch Platinieren mit einer dünnen Zwischenschicht 35 in der oben erörterten Weise im Bereich des Getters 45 beschichtet worden ist.

Der Einsatz einer Zwischenschicht 35 gestattet auch das Punktverschweißen eines Getters 47 auf der Außenseite von aus Kupfer bestehenden Endschirmen 25 beziehungsweise Getter 49 auf der Innenseite der Endschirme 25.

Wenn die Balgkappe 31 nicht aus einem verschweißbaren Material, sondern aus Kupfer besteht, kann durch die vorbeschriebene Zwischenschicht 35 eine aus Kupfer bestehende Balgkappe 31 so vorbereitet werden, dass sie durch Punktschweißen auf ihrer Außenseite mit einem Getter 46 oder auf ihrer Innenseite mit einem Getter 51 verbindbar ist.

Da der feste Leiter 3 und der bewegliche Leiter 7 aus massivem Kupfer bestehen, ist es gewöhnlich nicht möglich, Getter mit diesen Leitern zu verschweißen. Wenn man jedoch wenigstens kleine Bereiche der Leiter 3 und 7 mit einer Zwischenschicht 35 insbesondere aus CrNi platiniert, ist es möglich, auch an einem aus massivem Kupfer bestehenden feststehenden Leiter 3 ein Getter 48 oder an einem beweglichen Leiter 7 ein Getter 50 durch Punktschweißen anzubringen.

Selbstverständlich ist es nicht erforderlich, Getter an sämtlichen oben als Ausführungsbeispiele beschriebenen Stellen anzubringen. Vielmehr gestattet der Einsatz von Zwischenschichten 35 der oben beschriebenen Art, Getter an einer oder mehreren Stellen innerhalb einer Vakuumschaltröhre anzubringen, die bisher eine Befestigung durch Verschweißen nicht erlaubten.

## Patentansprüche

1. Verfahren zur Befestigung eines Getters (33, 43, 45, 46, 47, 48, 49, 50, 51) an einem unter Einsatz von Kupfer hergestellten Konstruktionsbauteil (3, 7, 13, 15, 23, 25, 31) einer Vakuumschaltröhre,
**dadurch gekennzeichnet, dass** die für die Befestigung des Getters vorgesehene Oberfläche des Konstruktionsbauteils (3, 7, 13, 15, 23, 25, 31) als Unterlage für das Getter mit einer Zwischenschicht (35) aus einem elektrisch und thermisch schlecht leitenden Metall versehen wird, und das Getter (33, 43, 45, 46, 47, 48, 49, 50, 51) anschließend auf dem durch die Zwischenschicht (35) gebildeten Verbundmaterial angeschweißt wird.

2. Verfahren nach Anspruch 1,
**dadurch gekennzeichnet, dass** die Befestigung durch Punktschweißen erfolgt.

3. Verfahren nach Anspruch 1 oder 2,
**dadurch gekennzeichnet, dass** die Zwischenschicht (35) auf dem Konstruktionsbauteil (3, 7, 13, 15, 23, 25, 31) mit einer Beschichtungsdicke von 0,01 bis 1 mm, vorzugsweise 0,1 mm, erstellt wird.

4. Verfahren nach Anspruch 1 bis 3,
**dadurch gekennzeichnet, dass** die Zwischenschicht (35) durch Platinieren, Galvanisieren oder Sputtern herstellbar ist.

5. Verfahren nach einem der vorstehenden Ansprüche,
**dadurch gekennzeichnet, dass** das Gettermaterial des Getters (33) auf einem Träger aus einem Blechstreifen aufgebracht wird.

6. Verfahren nach Anspruch 5,
**dadurch gekennzeichnet, dass** der Blechstreifen aus vernickeltem Eisenblech hergestellt wird.

7. Verfahren nach einem der vorstehenden Ansprüche,
**dadurch gekennzeichnet, dass** für das Getter (33, 43, 45, 46, 47, 48, 49, 50, 51) als Gettermaterial Titan oder eine metallische Legierung wie ZrAl, ZrTi, ZrAlTi, ZrVFeTi oder MoTi verwendet wird.

8. Verfahren nach einem der vorstehenden Ansprüche,
**dadurch gekennzeichnet, dass** das Verschweißen durch Punkt-schweißen, Laserschweißen, Elektronenstählschweißen, Widerstandsschweißen oder Ultraschallschweißen erfolgt.

9. Vakuumschaltröhre (1) mit einem Konstruktionsbauteil (3, 7, 13, 15, 23, 25, 31), an dem ein Getter (33, 43, 45, 46, 47, 48, 49, 50, 51) befestigt ist,
**dadurch gekennzeichnet, dass** das Konstruktionsbauteil unter Einsatz von Kupfer hergestellt ist und im Befestigungsbereich des Getters (33, 43, 45, 46, 47, 48, 49, 50, 51) mit einer ein Verschweißen gestattenden und ein Verbundmaterial bildenden Zwischenschicht (35) aus einem elektrisch und thermisch schlecht leitenden Metall versehen ist und dass das fetter durch Schweißen befestigt ist.

10. Vakuumschaltröhre (1) nach Anspruch 9,
**dadurch gekennzeichnet, dass** im Bereich der Befestigung des Getters (33, 43, 45, 46, 47, 48, 49, 50, 51) ein Verbundmaterial aus Kupfer und CrNi-Edelstahl (35) vorgesehen ist.

## Claims

1. Method for attachment of a getter (33, 43, 45, 46, 47, 48, 49, 50, 51) to a structural component (3, 7, 13, 15, 23, 25, 31), which is produced using copper, of a vacuum interrupter tube,
**characterized in that**
that surface of the structural component (3, 7, 13, 15, 23, 25, 31) which is intended for attachment of the getter is provided as a substrate for the getter with an intermediate layer (35) composed of an electrically and thermally poorly conductive metal, and the getter (33, 43, 45, 46, 47, 48, 49, 50, 51) is then welded on the composite material which is formed by the intermediate layer (35).

2. Method according to Claim 1,
**characterized in that**
the attachment is carried out by spot welding.

3. Method according to Claim 1 or 2,
**characterized in that**
the intermediate layer (35) is produced on the structural component (3, 7, 13, 15, 23, 25, 31) with a layer thickness of 0.01 to 1 mm, preferably 0.1 mm.

4. Method according to Claims 1 to 3,
**characterized in that**
the intermediate layer (35) can be produced by platinizing, electroplating or sputtering.

5. Method according to one of the preceding claims, **characterized in that**
the getter material of the getter (33) is applied to a mount which is in the form of a sheet-metal strip.

6. Method according to Claim 5,
**characterized in that**
the sheet metal strip is produced from nickel-plated sheet iron.

7. Method according to one of the preceding claims,
**characterized in that**
titanium or a metallic alloy such as ZrAl, ZrTi, ZrAlTi, ZrVFeTi or MoTi is used as the getter material for the getter (33, 43, 45, 46, 47, 48, 49, 50, 51).

8. Method according to one of the preceding claims,
**characterized in that**
the welding is carried out by spot welding, laser welding, electron beam welding, resistance welding or ultrasound welding.

9. Vacuum interrupter tube (1) having a structural component (3, 7, 13, 15, 23, 25, 31) to which a getter (33, 43, 45, 46, 47, 48, 49, 50, 51) is attached,
**characterized in that**
the structural component is produced using copper and is provided in the attachment area of the getter (33, 43, 45, 46, 47, 48, 49, 50, 51) with an intermediate layer (35) which allows welding, forms a composite material and is composed of an electrically and thermally poorly conductive metal, and **in that** the getter is attached by welding.

10. Vacuum interrupter tube (1) according to Claim 9,
**characterized in that**
a composite material composed of copper and CrNi stainless steel (35) is provided in the area of the attachment of the getter (33, 43, 45, 46, 47, 48, 49, 50, 51).

## Revendications

1. Procédé de fixation d'un getter (33, 43, 45, 46, 47, 48, 49, 50, 51) sur une pièce (3, 7, 13, 15, 23, 25, 31) de construction, fabriquée en utilisant du cuivre, d'un tube de commutation à vide,
**caractérisé en ce que** la surface, prévue pour la fixation du getter, de la pièce (3, 7, 13, 15, 23, 25, 31) de construction est pourvue comme support pour le getter d'une couche (35) intermédiaire en un métal mauvais conducteur électriquement et thermiquement et le getter (33, 43, 45, 46, 47, 48, 49, 50, 51) est soudé ensuite sur le matériau composite formé par la couche (35) intermédiaire.

2. Procédé suivant la revendication 1,
**caractérisé en ce que** la fixation s'effectue par soudure par points.

3. Procédé suivant la revendication 1 ou 2,
**caractérisé en ce que** la couche (35) intermédiaire est mise sur la pièce (3, 7, 13, 15, 23, 25, 31) de construction en une épaisseur de revêtement de 0,01 à 1 mm, de préférence de 0,1 mm.

4. Procédé suivant les revendications 1 à 3,
**caractérisé en ce que** la couche (35) intermédiaire peut être produite par platinisation, par galvanisation ou par pulvérisation cathodique.

5. Procédé suivant l'une des revendications précédentes,
**caractérisé en ce que**
l'on dépose la matière du getter (33) sur un support en une bande de tôle.

6. Procédé suivant la revendication 5,
**caractérisé en ce que**
l'on prépare la bande de tôle en tôle de fer nickelé.

7. Procédé suivant l'une des revendications précédentes,
**caractérisé en ce que**
l'on utilise pour le getter (33, 43, 45, 46, 47,48, 49, 50, 51) comme matière de getter du titane ou un alliage métallique comme ZrAl, ZrTi, ZrAlTi, ZrVFeTi.

8. Procédé suivant l'une des revendications précédentes,
**caractérisé en ce que**
l'on effectue la soudure par soudure par points, par soudure par laser, par soudure par faisceau d'électrons, par soudure par résistance ou par soudure par ultrasons.

9. Tube (1) de commutation à vide ayant une pièce (3, 7, 13, 15, 23, 25, 31) de construction à laquelle est fixée un getter (33, 43, 45, 46, 47, 48, 49, 50, 51),
**caractérisé en ce que**
la pièce de construction est fabriquée en utilisant du cuivre et est munie dans la zone de fixation du getter (33, 43, 45, 46, 47, 48, 49, 50, 51) d'une couche (35) intermédiaire autorisant une soudure et formant un matériau composite en un métal mauvais conducteur électriquement et thermiquement et **en ce que** le getter est fixé par soudure.

10. Tube (1) de commutation à vide suivant la revendication 9,
**caractérisé en ce que**
il est prévu un matériau composite en cuivre et en acier fin CrNi (35) dans la zone de la fixation du getter (33, 43, 45, 46, 47, 48, 49, 50, 51).
